# EUROPEAN PATENT SPECIFICATION

(11) **EP 1 086 389 B1**
(45) Date of publication and mention of the grant of the patent: **30.06.2010**
(21) Application number: 99915289.5
(22) Date of filing: 06.04.1999
(51) Int. Cl.: G02B 5/30, C03B 37/00, C03C 15/00

(54) **ULTRA-THIN GLASS POLARIZERS AND METHOD OF MAKING SAME**
ULTRA-DÜNNEGLASPOLARISATOREN UND VERFAHREN ZUR HERSTELLUNG
VERRES POLARISANTS ULTRA-MINCES ET LEUR PROCEDE DE FABRICATION

(30) Priority: 14.05.1998 US 85464 P
(43) Date of publication of application: 28.03.2001
(73) Proprietor: Corning Incorporated, Corning NY 14831 (US)
(72) Inventor: BORRELLI, Nicholas, F., Elmira, NY 14905 (US); GROSSMAN, David, G., Corning, NY 14830 (US); MANN, Larry, G., Painted Post, NY 14870 (US); MORDARSKI, Jeanne, M., Albuquerque, NM 87108 (US)
(74) Representative: Marchant, James Ian
(86) International application number: PCT/US1999/007521
(87) International publication number: WO 1999/059006

(56) References cited:
- EP-A- 0 719 741
- JP-A- 8 231 241
- JP-A- 59 083 951
- US-A- 4 304 584
- US-A- 4 486 213
- STOOKEY S D ET AL: "SELECTIVE POLARIZATION OF LIGHT DUE TO ABSORPTION BY SMALL ELONGATED SILVER PARTICLES IN GLASS" APPLIED OPTICS, OSA, OPTICAL SOCIETY OF AMERICA, WASHINGTON, DC, US, vol. 7, no. 5, May 1968 (1968-05), pages 777-779, XP001201941 ISSN: 0003-6935
- KIZUKU YAMAKI, KATZUTAKA BABA AND MITSUNOBU MIYAGI: "Submicrometer-thick optical polarizing films with high extinction ratio using stacked silver island films" ELECTRONICS AND COMMUNICATIONS IN JAPAN, vol. 82, no. 6, 1999, pages 17-23, XP002362007

## Description

### FIELD OF THE INVENTION

The invention relates to ultra-thin light polarizing glass articles and a method for making same. In particular, it relates to a novel method for making silver-containing polarizing glass, and ultra-thin polarizing glass articles made from such glass. Specifically, the invention relates to a single layer light polarizing device free of adjacent non-polarizing regions.

### BACKGROUND OF THE INVENTION

The use of very thin polarizing devices makes it possible to produce optical components without the need for expensive lens elements and more importantly, lessen alignment problems in order to maintain high light throughput. For any integrated device, the goal is to shorten the optical pathlength in order to decrease diffraction losses. These, and other aspects of vertical integration technology, as it is known, are described by Shiraishi et al., in Vertical Integration Technology for Fiber-Optic Circuit, OPTOELECTRONICS, Vol. 10, No. 1, pp.55-74, March 1995.

The closest product of which we are aware, for producing optical isolators of the kind described herein is POLARCOR™, a high quality finished optical component available from Coming Incorporated, Coming, NY. This product is available in planar shapes with dimension up to 30 mm parallel to the major principal transmission direction.

POLARCOR™ products are also available in thickness as low as 0.2 mm.

In addition to POLARCOR™, we are aware of a several patents such as U. S. 5,430,573; 5,322,819; 5,300,465; 5,281,562; 5,275,979; 5,045,509; 4,792,535; 4,479,819; JP 4-279337; JP 5-208844; and EP 0 719 741 all of which have described glass articles which are polarizing in the infrared region.

JP 4-279337; JP 5-208844 describe a copper-based polarizing glass which, according to the patent application can measure less than 240 µ in thickness. However, the examples were limited to glass thickness in the range of 100 to 1000 µ. The polarizing glass of this patent application was prepared by polishing stretched copper halide-containing glass to a thickness in the range of 100 to 1000 µ, and then subjecting the glass to a hydrogen atmosphere to form polarizing glass.

One disadvantage of the methods described in the above references, at least with respect to making ultra-thin polarizing glass, is the difficulty of handling and processing very thin free-standing glass pieces as required in the instant invention. In this connection, JP[Hei]9-86956 suggests a method for reducing loss due to the high stress used for stretching small crystals embedded in a glass matrix. However, there continues to be a need for improvements in the processes for making thin glass polarizers.

EP-0 719 741 A1 discloses a process for producing a polarizing glass containing shape-anisotropic metal particles dispersed in an oriented state therein, which comprises drawing a glass preform containing metal halide particles dispersed therein while its viscosity is between 2 x 10⁶ and 7 x 10⁷ poises, and subjecting the drawn glass to a reducing treatment so that some or all of the metal halide particles are reduced to metal particles. The process enables production of a polarizing glass in high yield from a glass containing metal halide particles as starting material while avoiding breakage or fracture during elongation as well as respheroidisation of the metal halide particles. The thickness of the drawn glass is preferably 0.2mm to 0.5mm.

Accordingly, it is the object of the present invention to provide approaches for making ultra-thin polarizing glass articles in which the above difficulties are reduced or eliminated.

### SUMMARY OF THE INVENTION

The invention relates to an ultra-thin polarizing glass, unique in that the glass is monolithic and has dispersed across its entire breadth and thickness, elongated submicroscopic metal particles. The metal particles have a long axis such that the glass preferentially absorbs polarizing components of light that is parallel to the long axis to allow high transmittance of light, which vibrates perpendicular to the long axis. The polarizing glass is also unique in that it is essentially free of metal halide particles which tend to impart certain undesirable optical properties to the glass such as photochromic properties, or light scattering caused by the presence of tiny halide crystals embedded in the glass.

According to one aspect the present invention provides a single layer polarizing glass device free of adjacent non-polarizing glass regions, the polarizing glass device having an extinction ratio greater than 10dB in a wavelength greater than 0.45 µm, the device containing elongated metallic silver particles and being essentially free of silver halide particles, characterized in that said device has a thickness in the range of 10-50 µm.

According to another aspect the present invention provides a process for making an ultra-thin polarizing glass device which is essentially free of metal halide particles, comprising the steps of:
a) providing a glass device comprising a first polarizing region containing elongated metal crystals and a second non-polarizing region containing elongated metal halide crystals;
b) bonding said first region to a substrate;
c) removing the second region to expose said first region; and
d) separating said first region from the substrate to form an ultra-thin polarizing glass device.

### BRIEF DESCRIPTION OF THE DRAWINGS

FIG. 1 is a schematic diagram of a POLARCOR^{™} glass which can be used to produce ultra-thin polarizing glass;
FIG. 2 is a schematic diagram of one embodiment of the inventive method of producing ultra-thin polarizing glass;
FIG. 3 is a schematic diagram illustrating another embodiment of the inventive method of producing ultra-thin polarizing glass; and
FIG. 4 is a schematic diagram illustrating an embodiment in which metal halide containing glass is processed while encased in an outer skin glass.

### DETAILED DESCRIPTION OF THE INVENTION

In order to produce polarizing glass articles of the invention measuring less than 200 µ in thickness, we have developed a process by which polarizing glass can be thinned down to form an ultra-thin polarizing glass measuring even less than 50 µ in thickness, preferably having a thickness in the range of 10 to 40 µ.

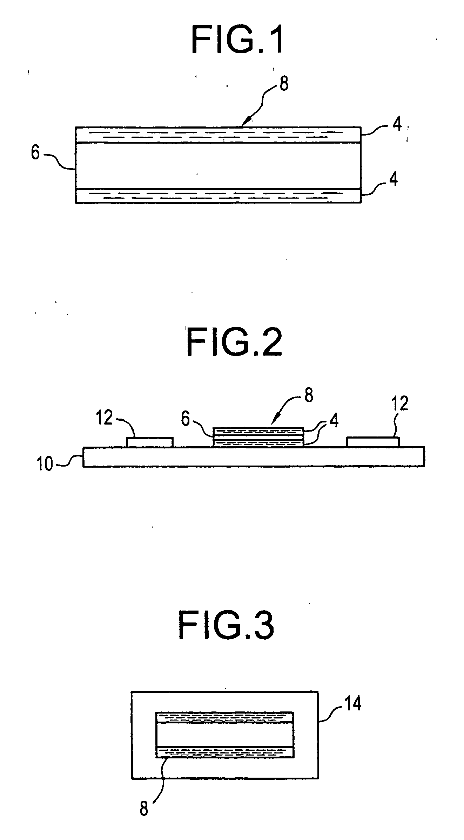

In one particularly useful embodiment, the process begins with a piece of POLARCOR^{™} glass 8 (FIG. 1), having two polarizing glass layers 4, separated by a non-polarizing region 6. The polarizing layers 4 of the glass contain stretched or elongated metal particles, while the non-polarizing central region contains elongated or stretched metal halide particles. In this embodiment (FIG. 2), to form very thin polarizing glass articles from the POLARCOR^{™} glass, the glass 8 is first blocked or bonded to a suitable substrate 10 using an appropriate material such as a resin, wax, or a resin/wax mixture. The glass is bonded onto the substrate such that one of the polarizing layers 4 is in abutting contact with the substrate 10. Two cover slips 12 are then placed on either sides of the glass as shown in FIG. 2. The slips, which are optional, serve to protect the edges of the POLARCOR™ glass during the lapping process.

Other appropriate blocking (bonding) compounds can also be used such as Loctite^{®} 412, a cyanoacrylate adhesive available from Loctite Corporation, Rocky Hill, CT. After bonding the glass to the substrate, the top polarizing layer and the central non-polarizing region are removed, for example, by a single-side lapping process, optionally followed by a polish with a cerium oxide slurry. Then, while the bottom polarizing layer is still bonded to the substrate, the glass is diced (sliced) to obtain thin wafers of polarizing glass having the desired thickness. This dicing step can be done using a high speed precision wafer saw. Optionally, the wafers are further cut or diced to various lengths to obtain desired dimensions. The wafers are then separated and removed from the substrate by dissolving the blocking compound in a suitable solvent such as acetone, optionally finished by polishing, and then cleaned. The step of removing the top polarizing layer and the central non-polarizing layer can also be done by single-side lapping, chemical thinning, or by a combination of the single-side lapping followed by chemical thinning. Examples of useful chemical thinning techniques include use of suitable chemicals such as acid fluorides or molten sodium hydroxide baths. Using this technique 1mm x 2mm wafers having a thickness in the range of 1 to 200 µ (preferably less than 100 µ) can be obtained.

In another embodiment (FIG. 3), the POLARCOR™ glass 8 to be thinned is encased in an appropriate medium 14 such as an outer skin glass of the type described in U.S. patent 4,486,213. In this embodiment, while still encased in the skin glass or other appropriate medium, thin wafers of polarizing glass are then sliced from the two polarizing layers as described above. The advantage of this approach is that the outer skin glass provides additional bulk and stiffness to the piece for ease of handling during the thinning process. The outer skin glass is subsequently removed by any suitable method such as by chemical dissolution.

In another embodiment, glass containing elongated silver halide particles is thinned to a desired thickness in the range of 10 to 50 µ using any of the above dicing and thinning techniques. After dicing and thinning to a desired thickness, the glass is subjected to a reducing gas environment as disclosed in U. S. patent nos. 4,479,819 and 4,908,054, to convert all the silver halide particles to elongated metallic silver particles and to thereby render the glass polarizing.

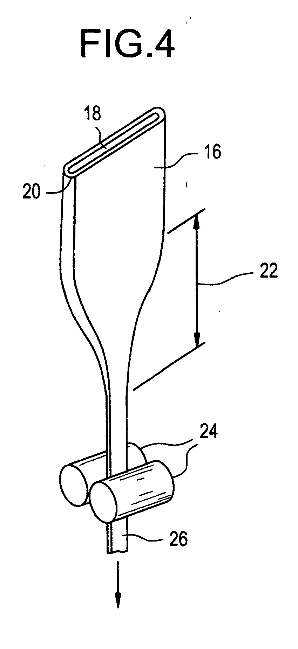

In still another embodiment, silver halide-containing glass is first encased in an appropriate medium to form a composite structure. The medium is preferably any gas permeable material which will not react with the glass. A particularly useful example of such a medium is the outer skin glass described in U. S. 4,486,213. The composite structure (i. e., skin glass and silver halide-containing glass) is then co-stretched to form a thin silver halide-containing glass in which the silver halide particles are elongated to a desired aspect ratio, for example, as described in the U. S. 4,486,213 (herein incorporated by reference). FIG. 4 illustrates one practical method of stretching the silver halide particles. As shown in FIG. 4, the composite structure 16 is shown comprising the silver halide containing glass 18 and a skin glass 20. The composite structure 16 passes through a hot zone of a redraw furnace represented by arrow 22, wherein the composite structure is heated and stretched under tension by pulling rolls 24 to form a stretched composite structure 26.

The stretched structure is then exposed to a reducing gas atmosphere to reduce the elongated silver halide particles and thereby form glass containing elongated silver particles. The structure can then be sliced as described herein to form very thin slices of polarizing glass 8 encased in skin glass. The skin glass can be removed by any appropriate method to expose the stretched polarizing glass. For example, the skin glass can be washed away using a suitable solvent.

In this embodiment, the silver halide containing glass can be encased in the skin glass either after it has been formed and hardened, or in molten form while both the skin glass and the metal halide containing glass are being discharged from a separate glass feeders such as described in U. S. 3,582,306, or laminated glass sheet formers as described in U. S 4,204,027 and 4,214,886.

In still a further embodiment, silver halide-containing glass is first stretched to form elongated silver-halide particles having desired aspect ratios prior to encasement in a skin glass. After encasement, the structure is then exposed to a reducing gas environment to reduce the silver halide particles and form polarizing glass containing elongated silver particles. After the reducing step the glass containing elongated silver particles can then be thinned into a desired thickness using methods described herein.

### EXAMPLES

The following example describes one preferred method for making polarizing glass having a thickness less than 100 µ, preferably, less than 50 µ, and most preferably, in the range of 10 to 40 µ. The POLARCOR^{™} glass article used in the following example can be either a two-layer (a polarizing and a non-polarizing layer) or three-layer glass (a polarizing layer sandwiched between two non-polarizing layers).
1) measure and record the thickness of a glass slide and a POLARCOR^{™} piece using a metric micrometer;
2) place the glass slide, POLARCOR^{™} piece, and cover slips on a hot plate pre-set at a low temperature to allow the pieces to warm up;
3) smear some thermal set "rosin" on the glass slide and allow the rosin to melt; when melted, place the glass piece of POLARCOR^{™} on the rosin, place a cover slip on each side of the piece (Figure 2), and remove the slide from the hot plate to allow the glass to cool; and
4) measure the thickness of the glass slide and POLARCOR^{™} piece together, and subtract from this the initial thickness of the glass slide and POLARCOR™, to obtain the thickness of the rosin (smear) in order to determine the thickness of the POLARCOR™ during the thinning process;
5) after the slide has cooled sufficiently for further processing, place the slide on a thinning apparatus such as a Buehler Petro-thin unit (available from Buehler, Ltd., Lake Bluff, Il), and remove by grinding for example, the top portions of the POLARCOR™ piece until about 100 micron thickness is remaining;
6) remove the slide from the unit and measure the thickness of the slide and POLARCOR™ piece using a micrometer; from this number subtract the thickness of the slide and the thickness of the rosin later to obtain the amount of POLARCOR™ material remaining;
7) grind down the POLARCOR™ to remove enough of the top portions of the piece to obtain a very thin piece of material measuring about 20-50 µ. The grind and measure steps are repeated until the desired thickness is obtained.
8) Polish to obtain an ultra-thin polarizing glass piece. Any known polishing medium can be used for this process such as a cerium oxide polishing wheel.

In other experiments, using the methods described above, we have produced several batches of polarizing glass articles having a mean thickness as low as 10 µ after polishing.

To evaluate the optical performance of the glass polarizers of the invention, several samples 15x15 mm square, having thicknesses in the range of 27 to 34 µ as measured with an optical microscope, were tested by measuring the transmission and contrast ratio of the wafers. With the wafers still mounted on the substrate, measured transmission was about 90%, while contrast ratio was in the range of 3124 to 3514, at a wavelength of 1510-1590 nm. Extinction ratios measured for these samples ranged between 29 and 31 dB.

As contemplated herein, the grinding step can be accomplished in one step, or in a series of steps. For example, an initial grinding step can be done using a 1200 grit grinding wheel in order to reduce the thickness to within a first approximation of the desired thickness, followed by a second grinding step using a 2400 grit grinding wheel to obtain the final desired thickness to within the actual specifications.

In the above illustration, it will be observed that one of the original surfaces of the POLARCOR^{™} piece, the side that is in contact with the slide, has been preserved throughout the entire grinding process. The final step in producing an ultra-thin polarizing glass is to disengage the polarizing glass piece from the slide using any known process. We have found the use of a solvent (e. g., methylene chloride) in an ultrasonic bath to be particularly useful for this purpose.

## Claims

1. A single layer polarizing glass device free of adjacent non-polarizing glass regions, the polarizing glass device having an extinction ratio greater than 10 dB in a wavelength greater than 0.45 µm, the device containing elongated metallic silver particles and being essentially free of silver halide particles, **characterized in that** said device has a thickness in the range of 10-50 µm.

2. Process for making an ultra-thin polarizing glass device which is essentially free of metal halide particles, comprising the steps of:
a) providing a glass device (8) comprising a first ultra-thin polarizing region (4) containing elongated metal crystals and a second non-polarizing region (6) containing elongated metal halide crystals;
b) bonding said first region to a substrate (10);
c) removing the second region to expose said first region (4); and
d) separating said first region from the substrate to form an ultra-thin polarizing glass device.

3. Process according to claim 2, wherein said ultra-thin polarizing glass device has a thickness of 10-50 µm.

4. Process according to claim 2, wherein after step c), the glass is diced to obtain thin wafers of polarizing glass.

5. Process according to claim 4, wherein 1 mm x 2 mm wafers having a thickness in the range of 10-50 µm are obtained.

6. Process according to claim 2, wherein the polarizing regions contain elongated metal particles and wherein said metal particles comprise silver.

7. Process according to claim 2, wherein the second region is removed by single-sided lapping.

8. Process according to claim 7, wherein the second region is removed by a combination of steps comprising single-sided lapping followed by chemical thinning.

## Patentansprüche

1. Einschichtige polarisierende Glasvorrichtung, die frei ist von angrenzenden nicht-polarisierenden Glasabschnitten, wobei die polarisierende Glasvorrichtung ein Extinktionsverhältnis von größer als 10 dB bei einer Wellenlänge von über 0,45 µm besitzt, wobei die Vorrichtung längs gestreckte Silbermetallteilchen enthält und im Wesentlichen keine Silberhalogenidteilchen enthält, **dadurch gekennzeichnet, dass** die Vorrichtung eine Dicke im Bereich von 10-50 µm besitzt.

2. Verfahren zur Herstellung einer ultra-dünnen polarisierenden Glasvorrichtung, die im Wesentlichen keine Silberhalogenidteilchen aufweist, mit den Schritten:
a) Bereitstellen einer Glasvorrichtung (8), die einen ersten ultra-dünnen polarisierenden Abschnitt (4) aufweist, der längs gestreckte Metallkristalle enthält, und einen zweiten nicht-polarisierenden Abschnitt (6), der längs gestreckte Metallhalogenidkristalle enthält;
b) Binden des ersten Abschnitts an einen Träger (10);
c) Entfernen des zweiten Abschnitts, um den ersten Abschnitt (4) freizulegen; und
d) Abtrennen des ersten Abschnitts vom Träger, um eine ultra-dünne polarisierende Glasvorrichtung zu bilden.

3. Verfahren nach Anspruch 2, wobei die ultra-dünne polarisierende Glasvorrichtung eine Dicke von 10-50 µm besitzt.

4. Verfahren nach Anspruch 2, wobei nach dem Schritt c) das Glas in Würfel geschnitten wird, um dünne Wafer aus polarisierendem Glas zu erhalten.

5. Verfahren nach Anspruch 4, wobei 1 mm x 2 mm große Wafer mit einer Dicke im Bereich von 10-50 µm erhalten werden.

6. Verfahren nach Anspruch 2, wobei die polarisierenden Abschnitte längs gestreckte Metallteilchen enthalten und wobei die Metallteilchen Silber aufweisen.

7. Verfahren nach Anspruch 2, wobei der zweite Abschnitt durch ein einseitiges Läppen entfernt wird.

8. Verfahren nach Anspruch 7, wobei der zweite Abschnitt durch eine Kombination von Schritten entfernt wird, die ein einseitiges Läppen mit nachfolgender chemischer Verdünnung umfassen

## Revendications

1. Dispositif en verre polarisant à couche unique exempt de régions de verre non polarisant adjacentes, le dispositif en verre polarisant ayant un rapport d'atténuation supérieur à 10 dB dans une longueur d'onde supérieure à 0,45 µm, le dispositif contenant des particules d'argent métallique allongées et étant essentiellement exempt de particules d'halogénure d'argent, **caractérisé en ce que** ledit dispositif a une épaisseur dans la plage de 10 à 50 µm.

2. Procédé de fabrication d'un dispositif en verre polarisant ultrafin qui est essentiellement exempt de particules d'halogénure métallique, comprenant les étapes consistant à :
a) fournir un dispositif en verre (8) comprenant une première région polarisante ultrafine (4) contenant des cristaux métalliques allongés et une seconde région non polarisante (6) contenant des cristaux d'halogénure métallique allongés ;
b) coller ladite première région à un substrat (10) ;
c) retirer la seconde région pour exposer ladite première région (4) ; et
d) séparer ladite première région du substrat pour former un dispositif en verre polarisant ultrafin.

3. Procédé selon la revendication 2, dans lequel ledit dispositif en verre polarisant ultrafin a une épaisseur de 10 à 50 µm.

4. Procédé selon la revendication 2, dans lequel, après l'étape c), le verre est découpé en dés pour obtenir de fines tranches de verre polarisant.

5. Procédé selon la revendication 4, dans lequel des tranches de 1 mm x 2 mm ayant une épaisseur dans la plage de 10 à 50 µm sont obtenues.

6. Procédé selon la revendication 2, dans lequel les régions polarisantes contiennent des particules métalliques allongées et dans lequel lesdites particules métalliques comprennent de l'argent.

7. Procédé selon la revendication 2, dans lequel la seconde région est retirée par taille en facettes d'un seul côté.

8. Procédé selon la revendication 7, dans lequel la seconde région est retirée par une combinaison d'étapes comprenant la taille en facettes d'un seul côté suivie d'un amincissement chimique.
